# EUROPÄISCHE PATENTANMELDUNG

(11) **EP 0 676 407 A2**
(43) Veröffentlichungstag der Anmeldung: **11.10.1995**
(21) Anmeldenummer: 95103446.1
(22) Anmeldetag: 10.03.1995
(51) Int. Cl.: C07F 9/40

(54) **Verfahren zur Herstellung von Thiocarbonylmethanphosphonsäurediestern**

(30) Priorität: 11.04.1994 DE 4412346
(71) Anmelder: HOECHST AKTIENGESELLSCHAFT, D-65926 Frankfurt am Main (DE)
(72) Erfinder: Weferling, Norbert, Dr., D-50354 Hürth-Efferen (DE); Kleiner, Hans-Jerg, Dr., D-61476 Kronberg (DE)

(57) **Zusammenfassung**

Zur Herstellung von Thiocarbonylmethanphosphonsäurediestern der allgemeinen Formel (I) 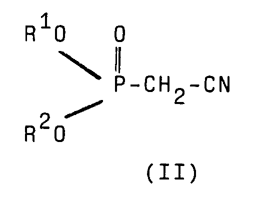
worin R¹ und R² für eine Alkylgruppe mit 1 bis 8 Kohlenstoffatomen stehen, wobei R¹ und R² gleich oder verschieden sein oder gemeinsam einen Ring bilden können, setzt man Cyanmethan-phosphonsäurediester der allgemeinen Formel (II) 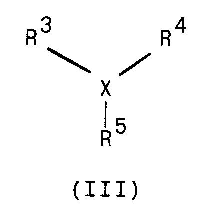
worin R¹ und R² die obengenannte Bedeutung haben, bis zu 8o Stunden bei Temperaturen von 0 bis 15o °C in Gegenwart eines Katalysators mit Schwefelwasserstoff unter Druck um.

## Beschreibung

Die vorliegende Erfindung betrifft ein Verfahren zur Herstellung von Thiocarbonylmethanphosphonsäurediestern der allgemeinen Formel (I) 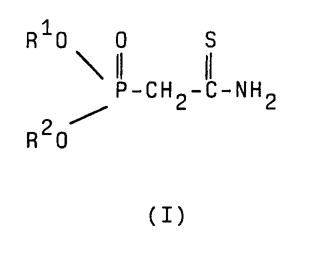
worin R¹ und R² für eine Alkylgruppe mit 1 bis 8, vorzugsweise 1 bis 4 Kohlenstoffatomen stehen, wobei R¹ und R² gleich oder verschieden sein oder gemeinsam einen Ring bilden können.

Aus der SU-PS 1 583 425 ist ein Verfahren zur Herstellung von thioamidosubstituierten Phosphonaten der allgemeinen Formel 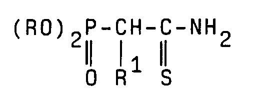
worin R für den Ethyl- oder Isopropylrest und R¹ für Wasserstoff oder -CH₂C(O)OC₂H₅ stehen, bekannt. Danach setzt man Dialkyl(cyanmethyl)phosphonate mit Schwefelwasserstoff in einem aus Triethylamin und Pyridin im Volumenverhältnis von 1 : 1 bestehenden Lösungsmittel bei Raumtemperatur um. Das Zielprodukt kristallisiert aus dem Reaktionsgemisch nach seiner Abkühlung auf 0 °C im Laufe von 12 Stunden aus.

Nachteilig sind bei den bekannten Verfahren schwankende Ausbeuten und die erforderliche Wiedergewinnung des Lösungsmittels sowie der notwendige erhebliche Überschuß an Schwefelwasserstoff.

Es ist daher Aufgabe der vorliegenden Erfindung, ein Verfahren zur Herstellung von Thiocarbonylmethanphonsäurediestern anzugeben, welches lösungsmittelfrei ablaufen kann und bei welchem nur ein geringfügiger Schwefelwasserstoff-Überschuß erforderlich ist. Das wird erfindungsgemäß dadurch erreicht, daß man Cyanmethanphosphonsäurediester der allgemeinen Formel (II) 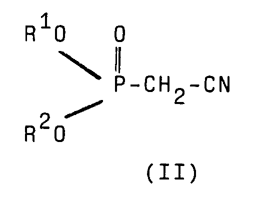
worin R¹ und R² die obengenannte Bedeutung haben, bis zu 8o Stunden bei Temperaturen von 0 bis 15o °C in Gegenwart eines Katalysators mit Schwefelwasserstoff unter Druck umsetzt.

Das Verfahren gemäß der Erfindung kann weiterhin wahlweise auch noch dadurch ausgestaltet sein, daß
a) die Umsetzung während 1o bis 3o Stunden erfolgt,
b) die Umsetzung bei Temperaturen von 1o bis 4o °C erfolgt,
c) man als Katalysator eine Verbindung der allgemeinen Formel (III) 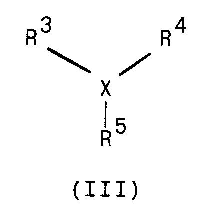 worin R³, R⁴ und R⁵ für jeweils eine gleiche oder verschieden-geradkettige oder -verzweigte Alkyl- oder Aralkylgruppe mit 1 bis 2o, vorzugsweise 1 bis 12, insbesondere 1 bis 4 Kohlenstoffatomen stehen und worin X ein Stickstoff- oder Phosphoratom ist, verwendet,
d) man als Katalysator eine Verbindung der allgemeinen Formel (IV) 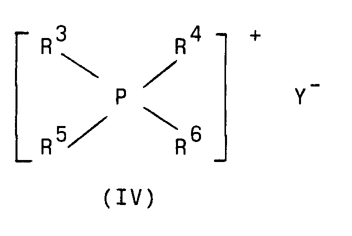 worin R³, R⁴, R⁵ und R⁶ für jeweils eine gleiche oder verschieden-geradkettige oder -verzweigte Alkyl- oder Aralkylgruppe mit 1 bis 2o, vorzugsweise 1 bis 12, insbesondere 1 bis 4 Kohlenstoffatomen stehen und worin Y ein anorganischer oder organischer Säurerest ist, verwendet,
e) als anorganischer Säurerest Halogenid oder Sulfat enthalten sind,
f) als organischer Säurerest Alkyl- oder Arylsulfonate enthalten sind,
g) Cyanomethanphosphonsäurediester und Schwefelwasserstoff im Molverhältnis 1 : (1 bis 2), vorzugsweise 1 : (1,1 bis 1,5) umgesetzt werden.

Beim erfindungsgemäßen Verfahren können als Ausgangsstoff Dimethylester, Diethylester, Diisopropylester, Dicyclohexylester, Dioctylester, Monomethylmonobutylester der Cyanomethanphosphonsäure verwendet werden.

Beim Verfahren gemäß der Erfindung sind als Katalysatoren tertiäre aliphatische Amine und Phosphane wie Trimethylamin, Triethylamin, Tri-n-propylamin, Tri-n-butylamin, Triethylphosphan, Tri-n-butylphosphan, Tri-n-octylphosphan oder Methyldicyclohexylphosphan sowie quartäre Phosphoniumsalze wie Tetraethylphosphoniumchlorid, Trimethylbenzylphosphoniumbromid, Tri-n-butylbenzylphosphoniumbromid oder Tetra-n-butylphosphoniumbromid besonders geeignet.

Das erfindungsgemäße Verfahren kann prinzipiell ohne Verwendung von Lösungsmitteln durchgeführt werden. Wenn dennoch ein Lösungsmittel verwendet wird, empfehlen sich Ethylacetat oder Toluol, da aus ihnen das gewünschte Zielprodukt auskristallisiert.

Die mit dem Verfahren gemäß der Erfindung erhältlichen Thiocarbonylphosphonsäurediester sind als Zwischenprodukte, beispielsweise für die Horner'sche Phosphonat-Reaktion von Bedeutung.

### Beispiel

In einem Stahlautoklaven (Nutzvolumen: 25o ml) wurde eine Mischung aus 5o g (0,282 Mol) Cyanomethanphosphonsäurediethylester, 7,2 g (o,o7 Mol) Triethylamin, 12 g (o,353 Mol) Schwefelwasserstoff und 5o ml Ethylacetat 24 Stunden bei 5o bis 6o °C geschüttelt. Nach Abkühlen des Autoklaven wurde aus ihm die Reaktionsmischung entnommen und auf 0 °C gekühlt. Dabei fiel ein Kristallisat an, welches nach dem Absaugen, Nachspülen und Trocknen 35 g wog. Nachdem das Filtrat vom Lösungsmittel befreit war, konnten aus dem Filtrat nach Kühlung weitere 15 g Feststoff gewonnen werden. Die insgesamt 5o g Thiocarbonylmethanphosphonsäurediethylester entsprachen einer Ausbeute von 84 % der Theorie.

## Patentansprüche

1. Verfahren zur Herstellung von Thiocarbonylmethanphosphonsäurediestern der allgemeinen Formel (I) 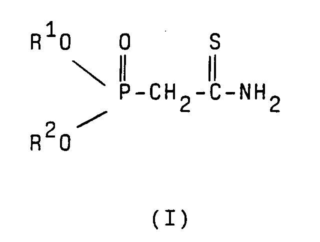 worin R¹ und R² für eine Alkylgruppe mit 1 bis 8, vorzugsweise 1 bis 4 Kohlenstoffatomen stehen, wobei R¹ und R² gleich oder verschieden sein oder gemeinsam einen Ring bilden können, dadurch gekennzeichnet, daß man Cyanmethanphosphonsäurediester der allgemeinen Formel (II) 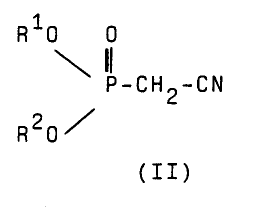 worin R¹ und R² die obengenannte Bedeutung haben, bis zu 8o Stunden bei Temperaturen von 0 bis 15o °C in Gegenwart eines Katalysators mit Schwefelwasserstoff unter Druck umsetzt.

2. Verfahren nach Anspruch 1, dadurch gekennzeichnet, daß die Umsetzung während 1o bis 3o Stunden erfolgt.

3. Verfahren nach Anspruch 1 oder 2, dadurch gekennzeichnet, daß die Umsetzung bei Temperaturen von 1o bis 4o °C erfolgt.

4. Verfahren nach mindestens einem der Ansprüche 1 bis 3, dadurch gekennzeichnet, daß man als Katalysator eine Verbindung der allgemeinen Formel (III) 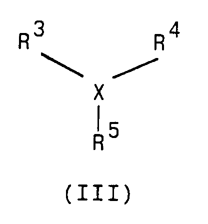 worin R³, R⁴ und R⁵ für jeweils eine gleiche oder verschieden-geradkettige oder -verzweigte Alkyl- oder Aralkylgruppe mit 1 bis 2o, vorzugsweise 1 bis 12, insbesondere 1 bis 4 Kohlenstoffatomen stehen und worin X ein Stickstoff- oder Phosphoratom ist, verwendet.

5. Verfahren nach mindestens einem der Ansprüche 1 bis 3, dadurch gekennzeichnet, daß man als Katalysator eine Verbindung der allgemeinen Formel (IV) 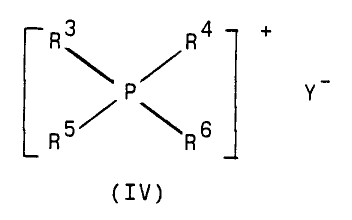 worin R³, R⁴, R⁵ und R⁶ für jeweils eine gleiche oder verschieden-geradkettige oder -verzweigte Alkyl- oder Aralkylgruppe mit 1 bis 2o, vorzugsweise 1 bis 12, insbesondere 1 bis 4 Kohlenstoffatomen stehen und worin Y ein anorganischer oder organischer Säurerest ist, verwendet.

6. Verfahren nach Anspruch 5, dadurch gekennzeichnet, daß als anorganischer Säurerest Halogenid oder Sulfat enthalten sind.

7. Verfahren nach Anspruch 5, dadurch gekennzeichnet, daß als organischer Säurerest Alkyl- oder Arylsulfonate enthalten sind.

8. Verfahren nach mindestens einem der Ansprüche 1 bis 7, dadurch gekennzeichnet, daß Cyanomethanphosphonsäurediester und Schwefelwasserstoff im Molverhältnis 1 : (1 bis 2), vorzugsweise 1 : (1,1 bis 1,5) umgesetzt werden.
